(19) Europäisches Patentamt

European Patent Office

Office européen des brevets

(11) Veröffentlichungsnummer: **0 142 128**
**B1**

(12) **EUROPÄISCHE PATENTSCHRIFT**

(45) Veröffentlichungstag der Patentschrift:
08.02.89

(21) Anmeldenummer: 84113450.5

(22) Anmeldetag: 07.11.84

(51) Int. Cl.⁴: **H 02 H 9/02, H 04 Q 3/00**

(54) Schaltungsanordnung zur Ableitung von Überspannungen.

(30) Priorität: 11.11.83 DE 3340927

(43) Veröffentlichungstag der Anmeldung:
22.05.85 Patentblatt 85/21

(45) Bekanntmachung des Hinweises auf die Patenterteilung:
08.02.89 Patentblatt 89/6

(84) Benannte Vertragsstaaten:
AT BE CH DE FR GB IT LI NL SE

(56) Entgegenhaltungen:
EP-A- 0 092 820
DE-A- 2 435 606
DE-A- 2 834 894
DE-A- 2 850 841
FR-A- 2 079 352
US-A- 4 200 898

(73) Patentinhaber: Siemens Aktiengesellschaft Berlin und
München, Wittelsbacherplatz 2, D-8000 München 2 (DE)

(72) Erfinder: Walter, Karl-Heinz, Dipl.-Ing.,
Herzog-Heinrich-Strasse 13, D-8018 Grafing (DE)

**Beschreibung**

Die Erfindung betrifft eine Schaltungsanordnung zur Ableitung von Überspannungen in Vermittlungsanlagen mit einem Hauptverteiler und einer Teilnehmerbaugruppe mit elektronischem SLIC, bei der in den Längszweigen der a/b-Adern vor dem elektronischen SLIC jeweils ein zweipoliger elektronischer Strombegrenzer angeordnet ist. Die Abkürzung SLIC steht in diesem Zusammenhang für Subscriber Line Interface Circuit.

Eine solche Schaltungsanordnung ist in der DE-A-2 834 894 beschrieben. Aus dieser Veröffentlichung ist bekannt – man vgl. insbesondere Fig. 1 –, jeweils einen Widerstand (LW) in die Längszweige der a/b-Adern einzuschleifen. Zwischen diesen als Strombegrenzer wirkenden Widerständen (LW) und der zu schützenden Schaltung sind zusätzlich Clamping-Dioden (DB) zum Ableiten von und damit zum Schutz vor Überspannungen angeordnet.

Die Längswiderstände (LW) in den Längszweigen der a/b-Adern weisen einen relativ hohen ohmschen Widerstandswert auf und schützen die Schaltung (Sch) vor allem vor langandauernden mittleren Störspannungen (z.B. 380 V) bzw. langandauerndem Kurzschluss, insbesondere gegen Starkstromleitungen.

Diese Längswiderstände (LW) haben aber wegen ihrer hohen Widerstandswerte den entscheidenden Nachteil, dass auch bei den durch die a/b-Adern fliessenden Nutzströmen, z.B. ein Rufstrom oder ein mit Informationssignalen modulierter Schleifenstrom, hohe Verluste in den Längswiderständen auftreten. Nachteilig ist auch, dass wegen der hohen Verlustleistung die Längswiderstände (LW) sich mit der zu sichernden Schaltung (Sch) auf einen gemeinsamen Substrat in integrierter Technik nicht herstellen lassen.

Einen Strombegrenzer, der diese Nachteile nicht aufweist, ist in der US-A-4 200 898 beschrieben. Das in der Fig. 1 dieser US-A-4 200 898 gezeigte Strombegrenzerelement weist zwei in Reihe und gegeneinander geschaltete FET's auf, wobei der Gate- und Source-Anschluss jedes FET's zusammengeschaltet sind und die Drain-Anschlüsse beider FET's miteinander verbunden sind. Bei dieser bekannten Schaltungsanordnung ist aber nachteilig, dass der Grenzstrom nicht einstellbar ist, sondern vielmehr durch die Bauelemente-Parameter der verwendeten FET's gegeben ist.

Der Erfindung liegt die Aufgabe zugrunde, eine Schaltungsanordnung zur Beseitigung von Überspannungen anzugeben, die zwischen Hauptverteiler und Teilnehmerbaugruppe angeordnet ist und bei Überspannung am Eingang nur einen Grenzstrom zulässt, der vom elektronischen SLIC noch toleriert werden kann, wobei der Grenzstrom einstellbar ist.

Diese Aufgabe wird bei einer Schaltungsanordnung der eingangs genannten Art durch die kennzeichnenden Merkmale des Anspruchs 1 gelöst.

Zweckmässige Weiterbildungen der Erfindung sind in den Unteransprüchen angeführt.

Die Vorteile des Gegenstandes der Erfindung werden anhand der folgenden Ausführungsbeispiele näher erläutert. In der dazugehörenden Zeichnung zeigen

Fig. 1 ein Prinzipschaltbild,

Fig. 2 einen monolithisch aufgebauten Strombegrenzer,

Fig. 3 die Kennlinie des Strombegrenzers nach Fig. 2 und

Fig. 4 einen Mehrfachkoppelpunkt mit Stützfunktion.

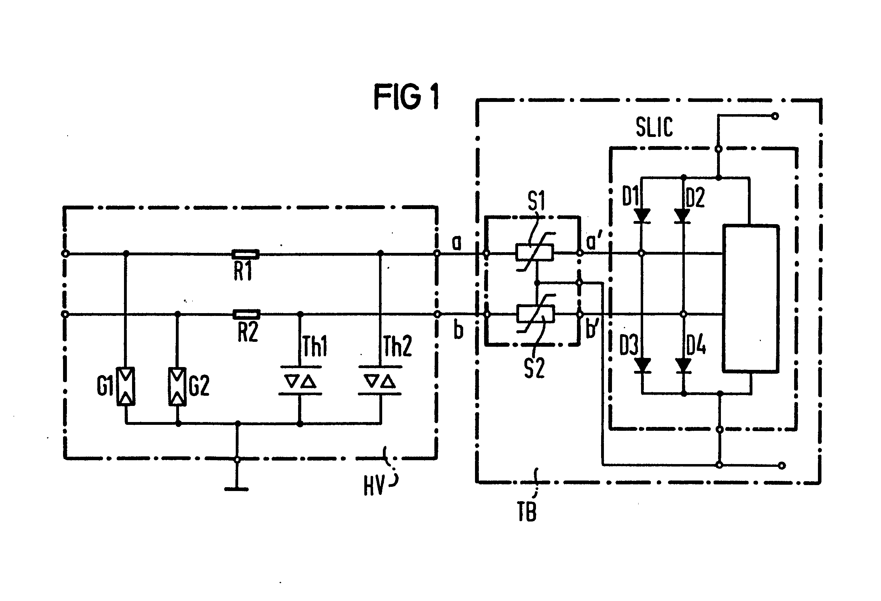

In der Fig. 1 ist das Prinzipschaltbild einer Gesamtschutzschaltung einer Vermittlungsanlage dargestellt, die aus dem Hauptverteiler HV und der Teilnehmerbaugruppe TB besteht. Im Hauptverteiler HV ist für nicht stark gefährdete Bauteile ein Thyristordiodenschutz mit den beiden Thyristoren Th1 und Th2 vorgesehen. Dadurch werden die Restspannungsspitzen auf einen bestimmten Wert (z.B. 250 V) begrenzt. Richtwerte für die Thyristordioden Th1 bzw. Th2 sind z.B. 100 A (10/100 μs) bzw. 500 A (8/20 μs). In stark gefährdeten Bereichen ist ein zusätzlicher Gasableiterschutz G1 bzw. G2 erforderlich, wobei zwischen Gasableiter G1, G2 und Thyristordiode Th1, Th2 je ein Entkopplungswiderstand R1 bzw. R2 eingefügt ist.

Damit sind alle hohen Ableitströme auf den Hauptverteiler HV beschränkt und auf der Teilnehmerbaugruppe TB können nur noch transiente Spannungsspitzen bis 250 V auftreten.

Da der elektronische SLIC auf der Teilnehmerbaugruppe TB jedoch nur eine niedrige Sperrspannung aufweist, ist die Restspitzenspannung von 250 V zu gross. Deshalb wird in die beiden Längszweige a, a' bzw. b, b' erfindungsgemäss je ein Strombegrenzer S1 bzw. S2 eingefügt, der aus je zwie in Reihe und gegeneinander geschalteten Leistungs-MOS-FET besteht. Dadurch wird gewährleistet, dass bei Überspannung am Eingang nur ein Grenzstrom zugelassen wird, der vom elektronischen SLIC noch toleriert wird. Die Strombegrenzer S1 bzw. S2 nehmen also bei Überspannung die Spannungsspitzen als Längsspannung auf. Es versteht sich, dass die Spannungsfestigkeit dieser Begrenzer S1 bzw. S2 über der maximal auftretenden Spitzenspannung liegen muss (z.B. 300 V).

Die an ein Längsglied zu stellenden Übertragungstechnischen Anforderungen wie Niederohmigkeit und Linearität im Betriebsbereich werden von den erfindungsgemässen Leistungs-MOS-FET erfüllt. Dabei sind zwei in Reihe und gegeneinander geschaltete Leistungs-MOS-FET erforderlich, damit auch bei Stromrichtungsumkehr Übertragungs- und Begrenzungsfunktionen erfüllbar sind. Es ist vorteilhaft, die beiden Drains schaltungstechnisch zusammenzufassen, was eine monolithische Integration der Strombegrenzer S1, S2 ermöglicht.

Die Anforderungen an die Relativtoleranz der als Längswiderstände $R_a$, $R_b$ in den beiden Adern a, b, a', b' wirkenden Strombegrenzer $S_a$ bzw. $S_b$ werden durch folgende Verknüpfungen festgelegt:

$$R_a, R_b \leqslant 5\Omega \text{ für } I \leqslant \pm 100 \text{ mA und}$$
$$\Delta R = R_a - R_b \leqslant 1\Omega$$

Wird der maximale Strom z.B. bei 300 V mit 150 mA begrenzt, so kann bei den maximal auftretenden Transientenstörungen mit 1 ms Dauer keine Überlastung erfolgen.

Die vom Strombegrenzer noch durchgelassenen Spitzenströme können zwar am SLIC-Eingang a', b' noch Spannungen oberhalb der Betriebsspannungen erzeugen, die aber durch die in jedem SLIC ohnedies mitintegrierten Clamping-Dioden D1 bis D4 abgeleitet werden. Diese Clamping-Dioden D1 bis D4 werden zum Relativschutz des elektronischen SLIC benötigt und erzeugen deshalb keine zusätzlichen Kosten. Wegen der Begrenzung der Transientenspitzenströme auf 150 mA können diese Dioden D1 bis D4 kleinflächig dimensioniert bleiben.

Durch die Verteilung der Schutzmassnahmen auf die einzelnen Schutzorte erzielt man die folgenden Vorteile. An den Ausgangsklemmen a, b des Hauptverteilers HV treten nur noch niedere Spannungen auf, die nachfolgend keine besonderen Isolationsabstände erfordern. Die Absorption bzw. Reflexion der mit der Überspannung verbundenen Störenergie erfolgt zum grössten Teil im Hauptverteiler HV, der von seiner mechanischen Konstruktion hierfür auch am besten geeignet ist. Die Kombination unterschiedlicher Schutzprinzipien – Ableitung im Hauptverteiler HV und Strombegrenzung auf der Teilnehmerbaugruppe TB – macht den Schutz für Geräte, Anlagen und Personen wirksam und kostengünstig. Auf der Teilnehmerbaugruppe TB sind weder hohe Spannungen noch hohe Ströme abzuführen.

Der Diodenschutz im elektronischen SLIC sorgt für den notwendigen Relativschutz, d.h. er wird wirksam, wenn die Überspannung die augenblicklich anliegende Batteriespannung übersteigt. Mit der Aufteilung der Schutzorte ist auch eine eindeutig klare Abgrenzung der Schutzeigenschaften und Schutzpegel möglich.

Diese Methode kann auch für die Normierung der Schutzwerte herangezogen werden, was vorteilhaft ist, weil die Schutzaufgaben in verschiedenen Zuständigkeitsbereiche, wie z.B. Betriebsgesellschaften oder Systemhersteller, fallen.

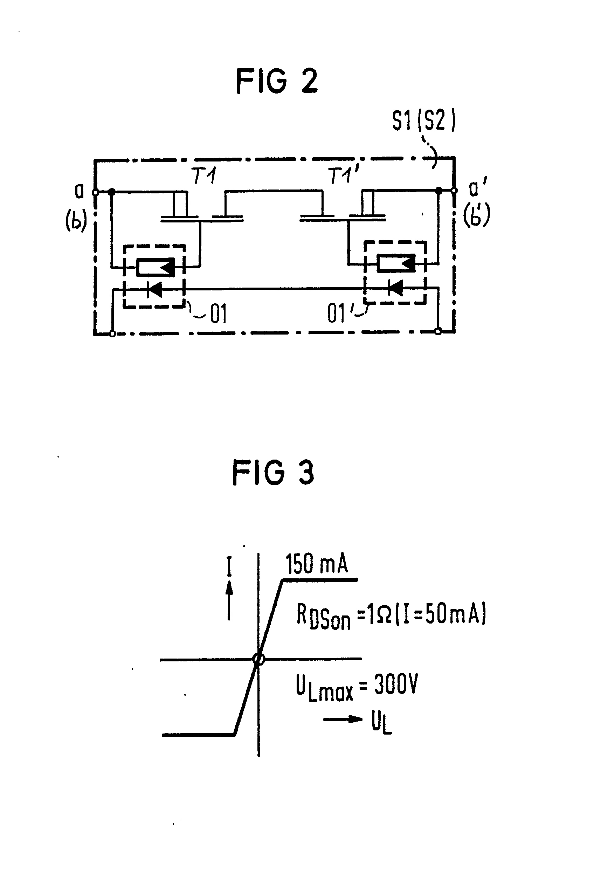

In der Fig. 2 ist das Prinzipschaltbild eines monolithisch aufgebauten Strombegrenzers S1 (S2) angeführt, der in den Längsadern a/a' bzw. b/b' zwischen Hauptverteiler und Teilnehmerbaugruppe angeordnet wird. Der Strombegrenzer S1 (S2) besteht aus zwei Leistungs-MOS-FET T1 und T1', deren Drains schaltungstechnisch zusammengefasst sind, die also in Reihe und gegeneinander geschaltet angeordnet sind und damit ein gemeinsames Substrat (Drain) besitzen. Zur Einstellung der Vorspannung für die Strombegrenzung bei Transistoren vom Enhancement-Typ dienen optoelektronische Koppler 01, 01'.

In der Fig. 3 ist die Kennlinie des Strombegrenzerelements gemäss Fig. 2 dargestellt. Wie der Fig. zu entnehmen ist, weist die Kennlinie einen exakten Nulldurchgang auf, was für die gewünschte Strombegrenzerfunktion wesentlich ist.

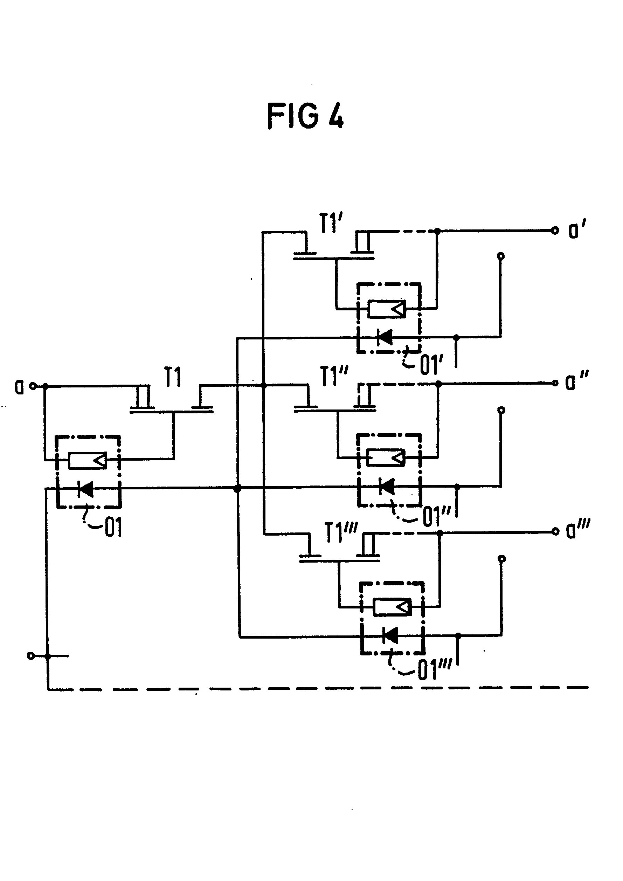

In der Fig. 4 ist ein Mehrfachkoppelpunkt mit Schutzfunktion dargestellt, mit dessen Hilfe nicht nur eine Strombegrenzerfunktion im Zweig a/a' erfolgt, sondern der auch weitere Funktionen im BORSCHT-Konzept übernehmen kann. BORSCHT bedeutet Battery Feeding, Over Voltage Protection, Ringing, Signalling, Coding, Hybride (4 Draht-2 Draht-Umsetzung), Testing. Dieser Mehrfachkoppelpunkt weist vier Transistoren T1, T1', T1'', T1''' auf, deren Drains schaltungstechnisch zusammengefasst sind. An den Koppelpunkten a'' bzw. a''' kann z.B. die Rufspannung eingekoppelt oder die Anschaltung von Testeinrichtungen übernommen werden. Zur Erzeugung der erforderlichen positiven Vorspannung, die geeignet ist, einen Stromgrenzwert einzustellen, dienen beim Ausführungsbeispiel gemäss Fig. 4 optoelektronische Koppler 01, 01', 01'', 01'''.

Auch der in Fig. 4 dargestellte Baustein kann in monolithisch integrierter Technik ausgeführt werden, wobei ggf. zur Einkopplung weiterer der oben angeführten Funktionen weitere Leistungs-MOS-FET (T1''''...) mit integriert werden können.

**Patentansprüche**

1. Schaltungsanordnung zur Ableitung von Überspannungen in Vermittlungsanlagen mit einem Hauptverteiler (HV) und einer Teilnehmerbaugruppe (TB) mit elektronischem SLIC, bei der in den Längszweigen der a/b-Adern vor dem elektronischen SLIC jeweils ein zweipoliger elektronischer Strombegrenzer (S1, S2) angeordnet ist, dadurch gekennzeichnet, dass als Strombegrenzer je zwei in Reihe und gegeneinander geschaltete Leistungs-MOS-FET's (T1, T1') angeordnet sind und dass zur Erzeugung einer positiven Vorspannung am Gate der Leistungs-MOS-FET's (T1, T1') optoelektronische Koppler (01, 01') dienen.

2. Schaltungsanordnung nach Anspruch 1, dadurch gekennzeichnet, dass die Drains der Leistungs-MOS-FET's zusammengeschaltet sind.

3. Schaltungsanordnung nach Anspruch 1 oder 2, dadurch gekennzeichnet, dass zur Einkopplung weiterer Funktionen zusätzliche Leistungs-MOS-FET's (T1'', T1''') in den Längszweigen der a/b-Adern angeordnet sind.

4. Schaltungsanordnung nach einem der Ansprüche 1 bis 3, dadurch gekennzeichnet, dass als Strombegrenzer ein Baustein in monolithisch integrierter Technik angeordnet ist.

**Claims**

1. Circuit arrangement for the drainage of overvoltages in switching systems comprising a main distributor (HV) and a subscriber module (TB) with electronic SLIC, in which a two-pole electronic current limiter (S1, S2) is in each case arranged in the series arms of the a/b wires in front of the electronic SLIC, characterized in that two in series and oppositely connected power MOSFETs (T1, T1') each are arranged as current limiters and that optoelectronic couplers (01, 01') are used for generating a positive bias voltage at the gate of the power MOSFETs (T1, T1').

2. Circuit arrangement according to Claim 1, characterized in that the drains of the power MOSFETs are connected together.

3. Circuit arrangement according to Claim 1 or 2, characterized in that additional power MOSFETs (T1'', T1''') are arranged in the series arms of the a/b wires for coupling in further functions.

4. Circuit arrangement according to one of Claims 1 to 3, characterized in that a chip in mono-lithically integrated technology is arranged as current limiter.

## Revendications

1. Montage pour la suppression de surtensions dans des installations de commutation, comprenant un répartiteur principal (HV) et une unité d'abonné (TB) avec un SLIC ou circuit d'interface pour boucle d'abonné électronique, dans lequel un limiteur de courant électronique bipolaire (S1, S2) est disposé, en amont du SLIC électronique, dans chacune des branches longitudinales des conducteurs a/b, caractérisé en ce que, en tant que limiteurs de courant, on a prévu chaque fois deux dispositifs MOS à effet de champ de puissance (T1, T1') montés en série et en opposition et que des coupleurs optoélectroniques (01, 01') servent à produire une polarisation positive sur la grille des dispositifs MOS à effet de champ (T1, T1').

2. Montage selon la revendication 1, caractérisé en ce que les drains des dispositifs MOS sont connectés ensemble.

3. Montage selon la revendication 1 ou 2, caractérisé en ce que des dispositifs MOS à effet de champ de puissance (T1'', T1''') supplémentaires sont disposés dans les branches longitudinales des conducteurs a/b pour le couplage d'entrée d'autres fonctions.

4. Montage selon une des revendications 1 à 3, caractérisé en ce qu'un composant intégré monolithique est prévu en tant que limiteur de courant.

FIG 1

EP 0 142 128 B1

# FIG 2

S1 (S2)

# FIG 3

150 mA

$R_{DSon} = 1\Omega \,(I = 50\,mA)$

$U_{Lmax} = 300V$

$\longrightarrow U_L$

# FIG 4